# EUROPÄISCHE PATENTSCHRIFT

(11) **EP 0 814 435 B1**
(45) Veröffentlichungstag und Bekanntmachung des Hinweises auf die Patenterteilung: **09.06.1999**
(21) Anmeldenummer: 97250123.3
(22) Anmeldetag: 17.04.1997
(51) Int. Cl.: G07C 5/00, G06F 1/00, G07C 5/08

(54) **Bergungsfähige Einrichtung zur Speicherung und Archivierung betriebsspezifischer Daten von schwimmenden Fahrzeugen**
Salvagable device for storing and archiving operation-specific data of vessels
Dispositif récupérable pour le stockage et l'archivage de données opératoires de navires

(30) Priorität: 22.04.1996 DE 19615905
(43) Veröffentlichungstag der Anmeldung: 29.12.1997
(73) Patentinhaber: Pro-Com Gesellschaft für Programmierung, Computer und Kopiertechnik mbH, 18546 Sassnitz/Mukran (DE)
(72) Erfinder: Hering, Jörg, 18528 Bergen (DE); Quass, Christian, 18528 Bergen (DE)
(74) Vertreter: Schnick, Achim

(56) Entgegenhaltungen:
- EP-A- 0 597 811
- GB-A- 2 242 330
- US-A- 5 187 978
- PATENT ABSTRACTS OF JAPAN vol. 096, no. 003, 29.März 1996 & JP 07 306256 A (NEC CORP), 21.November 1995,
- PATENT ABSTRACTS OF JAPAN vol. 096, no. 003, 29.März 1996 & JP 07 294624 A (MATSUSHITA ELECTRIC WORKS LTD), 10.November 1995,

## Beschreibung

Die Erfindung betrifft eine Einrichtung zur Speicherung und Archivierung betriebsspezifischer Daten von schwimmenden Fahrzeugen.

In den achtziger Jahren wurde in Deutschland ein System zur Erfassung schiffsbetriebsrelevanter Daten (speziell zu Fragen der Schiffskörperstabilität inclusive Schiffsfestigkeit im Seegang und Schwimmstabilität im glatten Wasser) und zur Aufzeichnung dieser Daten zum Zwecke besserer Ursachenanalyse nach Havarien und bei Schiffsverlusten entwickelt (Hansa 1987, Nr. 17, S. 1029). Zu diesem Zweck wurde ein nichtflüchtiger Speicher (Blasen-Speicher) in einer bergungsfähigen Seenotfunkboje (EPIRB Emergency Position Indicating Radio Beacon) angeordnet und gespeist. Der Schiffsführung wurde parallel die Möglichkeit gegeben, die aufgezeichneten Daten für betriebliche und navigatorische Maßnahmen zu nutzen. Dieses Projekt kann man als eine in sich geschlossene Lösung betrachten, in der von der Meßwerterfassung bis zur Datensicherung ein abgestimmtes System eingesetzt wird.

Unter Berücksichtigung der Erkenntnisse aus diesem Forschungsprojekt wurde in Großbritannien das Voyage Event Recorder-System entwickelt und auf zahlreichen Schiffen eingesetzt (Safety at Sea 1992, Nr. 278, S. 30). Hier werden auch schiffsbetriebsrelevante Daten zur Kontrolle des Schiffszustandes und zur Schiffsbetriebsoptimierung erfaßt und auf einem Videoband gespeichert, das sich in einem schwimmfähigen Behälter befindet.

Entsprechende Systeme gibt es als Flugschreiber in Flugzeugen, die nach Abstürzen ausgewertet werden können und Aufschluß über die letzten Flughandlungen geben sollen. Hierbei wird ein Metallband als Endlosschleife beschrieben, so daß immer die Daten der letzten Minuten verfügbar sind.

Seit 1993 ist der Einsatz der bergungsfähigen Seenotfunkboje EPIRB auf kommerziellen Schiffen Pflicht und Vorschrift. Sie hat die Aufgabe, nach einem Schiffsverlust die aktuelle Position oder einen Notruf zu senden, um ein möglichst schnelles Auffinden der Unglücksstelle zu ermöglichen (z. B. US 4981 453). Einige komfortable Modelle können noch ein paar Grunddaten aufnehmen, die im Havariefall "per Hand" einzugeben sind, wie "Brand", "Kollision" oder ähnliches. Es erfolgt hierbei also keinesfalls eine automatisierte Aufnahme von schiffsbetriebsrelevanten Daten.

Zum gegenwärtigen Zeitpunkt gibt es in der Seefahrt noch kein automatisch geführtes Erfassungssystem (weder elektronisch noch andersartig), welches dafür ausgelegt ist, alle notwendigen und gewünschten Daten über offene Schnittstellen automatisch zu erfassen und das auch offen für künftige herstellerunabhängige Informationssysteme ist und das nach schweren Havarien und Schiffsuntergängen zur Auswertung zur Verfügung steht. Vorhandene Systeme sind in spezielle Hardwareumgebungen eingebunden und bedingen den Einsatz dieser Hardwareumgebung zur Nutzung des zugehörigen Prozeßschreibers, wie zum Beispiel das Monitoring System (The Motor Ship 75 (1995) 896, S. 29). Außerdem erfolgt die Datenspeicherung dort auf Videobändern auf "mechanischem Wege", d. h., es sind bewegliche Bauteile vorhanden, die immer eine gewisse Störanfälligkeit und einen gewissen Wartungsaufwand bedingen.

Neben den genannten Entwicklungen und Systemen sind auch andere Geräte bekannt, die (bei unterschiedlicher Zweckbestimmung) Einrichtungen zur Speicherung und Archivierung relevanter Daten aufweisen. So zeigt die DE 3207127 C 2 eine Seenot-Nachrichtenboje, insbesondere für die Hochseeschiffahrt, die bei sinkendem Schiff selbständig aufschwimmt, mit einem von einer eingebauten Energiequelle gespeisten, automatisch arbeitenden Seenot-Funksender und einem Tonaufzeichnungsgerät.

Dieses Gerät speichert Analogdaten (nur Audio), bedingt also in jedem Fall auf die Sprachaufzeichnung abgestimmte Erfassungssysteme und ist somit nicht universell einsetzbar. Bekannt ist ferner ein mobiler Langzeitdatenspeicher (G 94 20 740.2 U 1) mit wechselbarem Massenspeicher (z. B. Memorycards), Rechnern (CPU), RAM und NMEA-Schnittstelle, der verschiedene Datenstrukturen verarbeiten und speichern kann. Dieser Datenschreiber ist nicht für die permanente Akkumulierung von Daten bis zu einem Havariefall, sondern für die Akkumulierung von Daten für begrenzte Einsatzfälle bestimmt. Das Gerät läßt zwar die theoretische Möglichkeit zu, Bilddaten zu übertragen, aber nicht in Echtzeit. Damit ist es für die Aufzeichnung von Radarbildern (analog Sprachenproblematik) ungeeignet. Außerdem kann jede Schnittstelle nur von einer Datenquelle bedient werden.

Eine ähnliche Entwicklung stellt der Seereise Datenschreiber (EP 0597811 A1) dar. Er weist einen eigenen Mikroprozessor auf und ist schon speziell für den Einsatz auf Seeschiffen vorgesehen, kann aber ebenso keine Bilddaten speichern und nutzt einen Bandrecorder zur Sprachaufzeichnung. Weiterhin enthält das System keine universellen Schnittstellen zur Anbindung an Fremdsysteme, die selbst schon Daten erfaßt haben und diese über Standardschnittstellen weitergeben müssen. Die Datenspeicherung erfolgt in statischen RAM-Bausteinen, die bei einem Batterieausfall die Daten verlieren. Aufgrund der fehlenden Universalschnittstellen ist die Datenaufzeichnung begrenzt auf 2 Sprachkanäle und die vorgegebenen Datengruppen. Eine Anpassung an sich ändernde Gegebenheiten auf dem Schiff ist nicht ohne Aufwand möglich. Aufgrund der geringeren Speicherkapazität sind auch größere Intervalle zwischen der Speicherung zweier aufeinanderfolgender Werte von Daten vorgesehen, die gerade beim Einsatz in Hochgeschwindigkeitsschiffen zu groß sein können. Eine Bergung ist nur durch aufwendige Tauchgänge möglich. Die Möglichkeit der Aufschwimmbarkeit ist nicht vorgesehen.

Schließlich ist durch die DE 40 41 915 ein satellitengestütztes Datenkommunikationssystem für dezentrale Kleinsensoren bekannt, bei dem u. a. ein Sensorsystem mit Sendeeinheit auf einer Boje angebracht werden kann. Die Erfindung zeigt die Bekanntheit der Verwendung von Rechnern bei der Datenspeicherung auf und Datenübertragung von Bojen, jedoch keine Lösung für einen die Anforderungen der Schiffssicherheitsbehörden erfüllenden Prozeßschreiber für die Ursachenermittlung bei Havarien und Schiffsverlusten.

Die Erfindung hat sich die Aufgabe gestellt, eine systemunabhängige und zugleich kostengünstige Lösung für eine Einrichtung zur Speicherung und Archivierung betriebsspezifischer Daten zu schaffen, die sich vor allem durch Modularität, Erweiterbarkeit und Anpassungsfähigkeit an verschiedene Schiffsausstattungen und künftige Entwicklungen in der maritimen Technik auszeichnet.

Bei der Vielzahl von Anbietern von Datenerfassungs- und Verarbeitungssystemen, auch in der Schiffahrt, ist es von eminenter Bedeutung, daß eine solche Einrichtung an ein beliebiges Fremdsystem angekoppelt werden kann. Die neue Einrichtung soll für eine Vielzahl von Einsatzfällen frei konfigurierbar und vom Segelboot bis zum Fährschiff oder Frachter sinnvoll einsetzbar sein.

Erfindungsgemäß wird die Aufgabe durch die Merkmale des Anspruches 1 gelöst. Vorteilhafte Ausgestaltungen ergeben sich aus den Unteransprüchen.

Mit dem erfindungsgemäßen elektronischen Prozeßschreiber für Seeschiffe wird qualitativ eine neue Stufe gegenüber den vorhandenen Sicherungssystemen erreicht. Der elektronische Prozeßschreiber ist derart kompakt ausgelegt, daß er in vorhandene EPIRB integriert werden kann und somit eine wesentliche Ergänzung darstellt und das System EPIRB mit neuen Funktionen ausstattet. Damit wird dem Nutzer des elektronischen Prozeßschreibers ermöglicht, ohne den Einsatz zusätzlicher Geräte auf dem Schiffsdeck umfangreichere Absicherungsfunktionen bereitzustellen. Außerdem muß der elektronische Prozeßschreiber zur Bergung und Sicherung der Daten nach einem Schiffsverlust in jedem Fall eine der EPIRB entsprechende Zusatz funktionalität besitzen, so daß die Integration in eine EPIRB vom ingenieurtechnischen Standpunkt sinnvoll ist.

Es ist auch möglich, den elektronischen Prozeßschreiber in eine hermetische dichte Tauchkapsel mit Peilsender zum Bergen der Einrichtung zu intergrieren, d.h., daß der Prozeßschreiber mit dem Schiff untergehen soll.

Ein wesentliches Charakteristikum des erfindungsgemäßen elektronischen Prozeßschreibers ist die Ausstattung mit einer Eigenintelligenz durch den Einsatz eines frei konfigurierbaren Mikrorechnersystems. Dadurch werden die universellen Schnittstellen, die Skalierbarkeit und Anpassungsfähigkeit und der konsequente Einsatz ausschließlich nichtbewegter Baugruppen ermöglicht.

Das ist die eigentliche Grundlage für die innovativen Eigenschaften des neuen elektronischen Prozeßschreibers. Dadurch werden die universellen Schnittstellen, der Einsatz des elektronischen Prozeßschreibers als eigenständiges, sich auch an zukünftige Erfordernisse anpaßbares System und der konsequente Einsatz ausschließlich nichtbeweglicher Baugruppen ermöglicht. Auf diesem Wege ist die angestrebte Modularität und Systemunabhängigkeit erreichbar. Der elektronische Prozeßschreiber kann durch Universalschnittstellen an ein beliebiges Fremdsystem gekoppelt werden und ist durch die Eigenintelligenz über Firmwareupdates an geänderte Anforderungen anpaßbar.

Diese Modularität ist eine wichtige Grundlage zur Erschließung vielfältiger Einsatzbereiche, da die Schiffseigner durch den Einsatz des elektronischen Prozeßschreibers nicht automatisch an ein bestimmtes zugehöriges EDV-System gebunden sind.

In den Zeichnungen ist ein Ausführungsbeispiel der Erfindung dargestellt. Es zeigen:
- Fig. 1: den grundsätzlichen Aufbau der EPIRB-Boje mit integriertem elektronischen Prozeßschreiber,
- Fig. 2: eine Prinzipskizze des elektronischen Prozeßschreibers,
- Fig. 3: eine Ausführung des Mikrorechnersystems mit einer Audio-Schnittstelle.

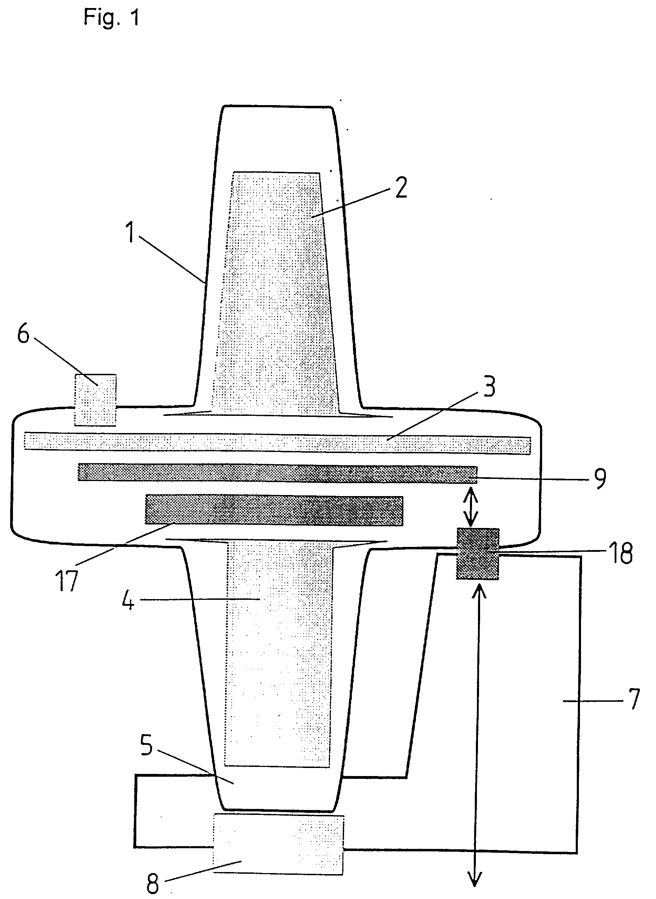

In Fig. 1 sind die Elemente der üblichen EPIRB sowie die Elemente des integrierten Prozeßschreibers dargestellt. In dem Bojenkörper 1 befindet sich der Bakensender und Notrufsender 2, die Steuerelektronik 3 sowie die Lithium-Batterie 4. Die Bojenarretierung 5 wirkt mit dem Wasserdrucksensor 8 für die Selbstauslösung zusammen. Durch einen Notschalter 6 kann die Boje aktiviert werden, bevor sie sich selbsttätig löst. Mit 7 ist der EPIRB-Fuß und die Halterung bezeichnet.

Die Elemente des integrierten Prozeßschreibers sind der Mikrorechner 9, der Akku-Block 17 sowie die lösbare Kontaktverbindung 18 zwischen EPIRB-Halterung 7 und Bojenkörper 1.

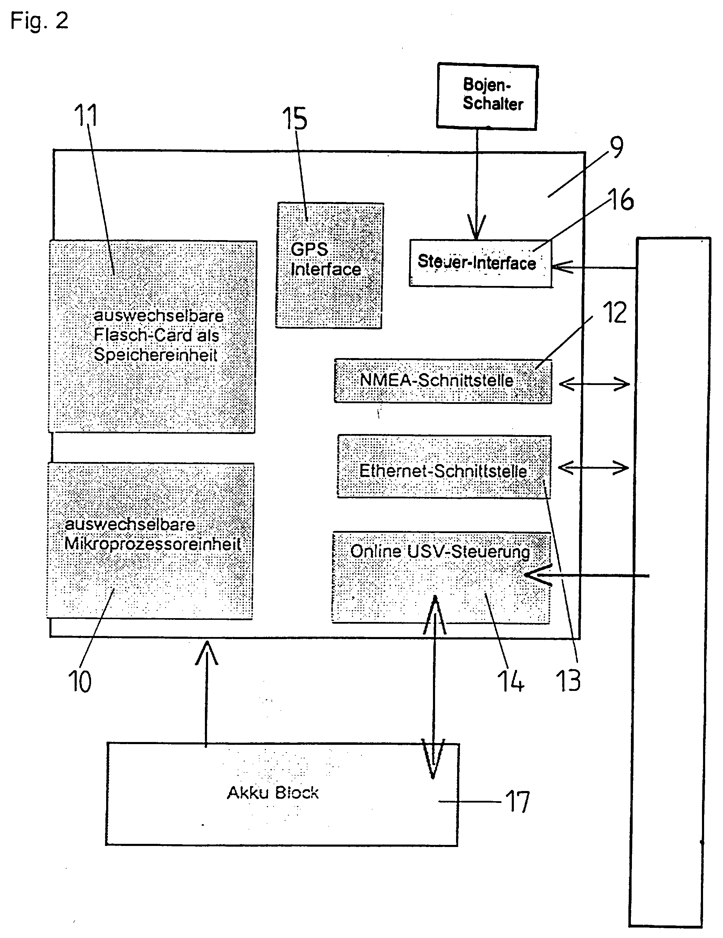

Fig. 2 zeigt die Hauptelemente des elektronischen Prozeßschreibers. Das Mikrorechnersystem 9 weist den Mikroprozessor 10, den Speicher 11, die NMEA-Schnittstelle 12 und die Ethernet-Schnittstelle 13 auf. Das System besitzt eine eigene Online-USV 14 und einen GPS-Empfänger 15. Wenn sich im Havariefall die Boje von der Halterung löst, erhält der elektronische Prozeßschreiber über ein Steuer-Interface 16 ein entsprechendes Statussignal.

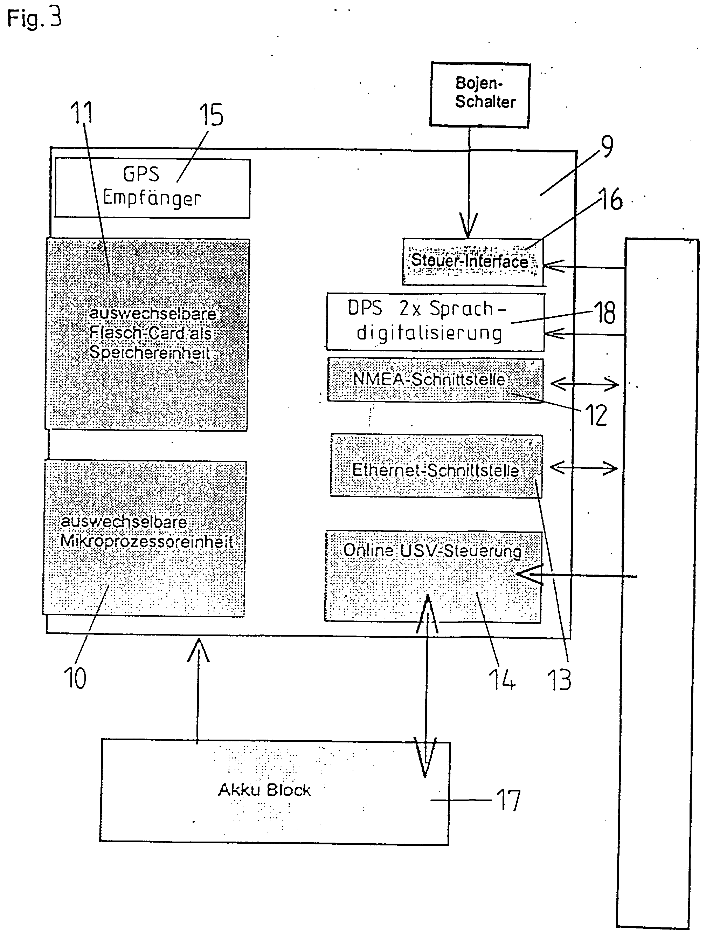

Fig. 3 zeigt eine Ausführung mit einer zusätzlichen Audio-Schnittstelle 18 zur Erfassung und Digitalisierung für zwei Sprachkanäle.

Die erste Schnittstelle arbeitet nach dem standardisierten und international üblichen NMEA 0183-Format (National Marine Electronics Association). Mit der Berücksichtigung dieser international üblichen Schnittstelle für Informationssysteme im Marinebereich kann der elektronische Prozeßschreiber ohne Änderungen vorhandener Systeme und ohne zusätzliche Installation spezieller Datenkonzentratoren auf Schiffen ergänzt und eingerichtet werden. Diese Flexibilität hat auch einen entscheidenden Einfluß auf die Senkung der Einstiegskosten für das System, da im einfachsten Fall nur der elektronische Prozeßschreiber und die Einpassung/Installation (in vom Prozeßschreiber unabhängige Informationssysteme) als Anschaffungskosten anfallen. Die Nutzung der NMEA-Schnittstelle bleibt auf Einsatzfälle begrenzt, bei denen keine Video- und Sprachdaten übertragen werden müssen und ausschließlich NMEA-konforme Datenquellen verfügbar sind. Dieser Standard wird inzwischen bei vielen elektronischen Geräten für die Schiffsführung und Navigation zur Datenübergabe eingesetzt. Damit ist das System nicht nur für Fährschiffe und große Seeschiffe interessant, sondern auch für kleinere Einheiten bis hin zu leistungsfähigen Segel- und Motorjachten.

Die 2. Schnittstelle ist eine weltweit übliche Ethernet-Schnittstelle für 10Base-T (Twisted-Pair Netze). Sie kann alternativ anstelle der NMEA-Schnittstelle bei Einrichtung des elektronischen Prozeßschreiber konfiguriert werden. Damit ist der elektronische Prozeßschreiber offen für die Übernahme großer Datenmengen von beliebigen Datenquellen, die über eine übliche Netzwerkschnittstelle verfügen. Im Gegensatz zur NMEA-Schnittstelle, die durch die serielle Übertragung nur einen begrenzten Datendurchsatz ermöglicht, bietet die Ethernet-Schnittstelle ausreichende übertragungskapazitäten auch für Bild- und Sprachdaten.

Die Ethernet-Schnittstelle wird für alle komplexeren Einsatzfälle genutzt. In diesem Fall werden ein oder mehrere Zusatzgeräte eingesetzt, die die Video- und Sprachdaten aufzeichnen und aufbereiten und die Daten weiterer NMEA-konformer oder nichtkonformer Datenquellen des Schiffes aufbereiten und über die Ethernet-Schnittstelle an den elektronischen Prozeßschreiber übergeben. Der elektronische Prozeßschreiber kann somit auch in am Markt angebotene komplexe Meßdatenerfassungs- und Auswertungssysteme integriert werden.

Als dritte Schnittstelle wird erfindungsgemäß eine Audio-Schnittstelle, über die zwei analoge Sprachkanäle digitalisiert und gespeichert werden können, vorgesehen.

Der elektronische Prozeßschreiber beinhaltet eine Flash-Card im PCMCIA-Format als nichtflüchtige elektronische Speichereinheit, einen Einplatinen-Mikrorechner als Steuereinheit mit integrierter Stromversorgungseinheit, eine 10Base-T Ethernet-Schnittstelle, serielle RS-422 Schnittstellen zur Realisierung der NMEA-Schnittstelle, bei entsprechenden Erfordernissen eine Audio-Schnittstelle für zwei Sprachkanäle, langlebige Akkumulatoren und einen optionalen GPS-Empfänger (Global Positioning System) als Positionserfassungseinheit. Die Sendeeinheit zum Orten der Einrichtung wird durch die EPIRB oder Tauchkapsel realisiert.

Die Stromversorgung und Datenverbindung zum Schiff erfolgt entweder über eine beim Entfernen der Boje aus der Halterung automatisch lösbare, wetterbeständige und druckwasserdichte Kontaktverbindung zwischen EPIRB und der Halterung der EPIRB oder über hermetisch dichte Kontakte bei der Tauchkapsel. Die Einrichtung besitzt elektronische Statuseingänge, über die der aktuelle Betriebszustand der EPIRB oder der Tauchkapsel erfaßt und protokolliert wird. Wenn die Boje aus der Halterung gelöst wird, beendet die Einrichtung automatisch ihre Arbeit und schaltet sich ab, ebenso wenn die Tauchkapsel eine bestimmte Wassertiefe erreicht, das Seefahrzeug somit gesunken ist bzw. Energieversorgung und Datenstrom über eine längere Zeit ausgefallen sind. Die Daten werden in der Einrichtung entsprechend ihrer Wertigkeit über unterschiedlich lange Zeiträume nach dem First in First out Konzept gespeichert (Stunden, Tage und Wochen). So ist immer ein aktueller Datenbestand verfügbar. Die Abspeicherung erfolgt blockweise ohne Kompression und Verschlüsselung mit Prüfsumme. Damit wird realisiert, daß bei möglichen Datenfehlern maximal der betroffene Datensatz unlesbar wird und die restlichen Daten auswertbar bleiben.

Die Zeitsteuerung und die Auswahl der zu speichernden Daten erfolgt über den integrierten Mikrorechner und kann bei der Installation der Einrichtung für jedes Schiff spezifisch festgelegt werden.

Sämtliche Daten werden vom Speichermanagement mit einem UTC-Zeitstempel abgelegt, der entweder vom Schiff oder von einem intergrierten GPS synchronisiert wird. Die Einrichtung führt ein eigenes Log, in dem alle Zustände und Aktivitäten gespeichert werden. Sämtliche Geräte, die Daten an die Einrichtung übergeben, sind angemeldet und werden von einer Überwachungslogik der Einrichtung überwacht, so daß Geräteausfälle ebenso wie Temperatur, Ladezustand, Akku-Funktionen erfaßt und protokolliert werden. Die integrierte Online-USV wird von der Überwachungslogik ebenfalls permanent überwacht, um Probleme der Energieversorgung rechtzeitig protokollieren zu können, damit geeignete Präventivmaßnahmen eingeleitet werden können. Sämtliche Funktionen der Einrichtung können im Normalbetrieb über ein externes Fernsteuer- und Diagnosegerät überwacht und ausgelesen werden. Ebenso ist es möglich, den Datenstand der Einrichtung im Normalbetrieb parallel zur ständig laufenden Datenaufzeichnung wieder auszulesen und für andere Zwecke, wie Auswertung, Replay, Sicherung von Havariezuständen, Langzeitarchivierung usw. zu nutzen. Firmwareänderungen sind auf dem gleichen Wege möglich. Im Normalbetrieb muß zu keinem Zeitpunkt das Gehäuse der Einrichtung geöffnet werden.

Wenn sich die Boje von der Halterung löst, das Schiff also untergeht, erhält der elektronische Prozeßschreiber ein entsprechendes Statussignal. In diesem Fall schließt der Mikrorechner die Datenübernahme ab, übernimmt die aktuelle Position und die Zeit vom integrierten Positionserfassungssystem, beendet die Archivierung der Daten, aktiviert die Positionssendeeinheit und beendet die Arbeit. Im Interesse eines möglichst geringen Energieverbrauches wird das System weitestgehend in CMOS-Technologie aufgebaut.

Nach der Bergung des elektronischen Prozeßschreibers wird die Flash-Card entnommen und kann in einem beliebigen Fremdsystem mit PCMCIA-Slot und dazu notwendiger spezieller Auswertesoftware ausgelesen werden. Damit stehen die Daten für umfangreiche Auswertemöglichkeiten zur Verfügung.

Der elektronische Prozeßschreiber stellt eine möglichst universelle und kostengünstige Lösung dar, um schiffsbetriebsrelevante Daten auch nach Schiffsverlusten auswerten zu können.

## Patentansprüche

1. Bergungsfähige Einrichtung zur digitalen Erfassung, Speicherung und ggf. Ausgabe von betriebsspezifischen Daten von schwimmenden Fahrzeugen mit einem elektronischen Prozeßschreiber mit eigenem Mikroprozessor (10), wobei die Einrichtung einen modularen und systemunabhängigen permanent aktiven Prozeßschreiber mit einem frei konfigurierbaren Mikrorechnersystem (9) mit universellen Schnittstellen und einem Flash-Speicher (11) aufweist, wobei die universellen Schnittstellen des Mikrorechnersystems (9) aus einer Ethernet-Schnittstelle (13) zur Echtzeiterfassung von Bild- und Sprachdaten und zur Erfassung von Betriebsdaten in NMEA-Form, aus einer NMEA-Schnittstelle (12) zur Erfassung von Betriebsdaten in NMEA-Form und aus einer Audio-Schnittstelle (18) zur Erfassung und Digitalisierung von 2 Sprachkanälen bestehen, daß der Mikroprozessor (10) und der Flash-Speicher (11) des Mikrorechnersystems (9) auswechselbar sind und daß die Einrichtung eine integrierte Online-Unterbrechungsfreie Stromversorgung (14) und eine Betriebsüberwachung besitzt.

2. Bergungsfähige Einrichtung nach Anspruch 1, dadurch gekennzeichnet, daß sie einen GPS-Empfänger (15) aufweist.

3. Bergungsfähige Einrichtung nach Anspruch 1 und 2, dadurch gekennzeichnet, daß sie in eine aufschwimmbare Seenotfunkboje (EPIRB) (1) integriert ist und der Mikrorechner (9) über Statuseingänge die jeweiligen Betriebszustände der EPIRB-Boje (1) über seine Überwachungslogik erkennt und in seinem Flash-Speicher protokolliert, ebenso wie Unterbrechungen der Stromversorgung, Ladezustand des Akkus, Betriebstemperatur in der Boje und sämtliche Steuerungsbefehle.

4. Bergungsfähige Einrichtung nach Ansprüchen 1 und 2, dadurch gekennzeichnet, daß sie in eine hermetisch dichte Tauchkapsel mit Peilsender zum Bergen der Einrichtung integriert ist.

5. Einrichtung nach den Ansprüchen 1 bis 4, dadurch gekennzeichnet, daß Daten unterschiedlich bewertet werden und damit über verschieden lange Zeiträume gespeichert werden können und daß diese Werte bei der Inbetriebnahme konfiguriert werden.

6. Einrichtung nach den Ansprüchen 1 bis 5, dadurch gekennzeichnet, daß über die Ethernet-Schnittstelle (13) Geräte verschiedener Hersteller als Datenquellen und Datenziele an den Mikrorechner (9) gleichzeitig angeschlossen sein können und über eine Überwachungslogik automatisch registriert, verwaltet und protokolliert werden.

7. Einrichtung nach den Ansprüchen 1 bis 6, dadurch gekennzeichnet, daß ein zweiter Mikrorechner ebenfalls über die Ethernet-Schnittstelle (13) angeschlossen sein kann und als redundantes System arbeitet, wobei Steuerungs- und Überwachungsfunktionen bis zum Geräteausfall nur vom ersten Mikrorechner ausgeführt werden.

## Claims

1. Recoverable device for the digital detection, storage and optionally outputting of operation-specific data of floating vehicles with an electronic process-variable recorder with its own microprocessor (10), wherein the device comprises a modular process-variable recorder which is independent of the system and is permanently active, with a freely configurable microcomputer system (9) with universal interfaces and a flash memory (11), wherein the universal interfaces of the microcomputer system (9) consist of an Ethernet interface (13) for the real-time detection of image and voice data and for the detection of operating data in NMEA form, of an NMEA interface (12) for the detection of operating data in NMEA form and of an audio interface (18) for the detection and digitalisation of two voice channels, the microprocessor (10) and the flash memory (11) of the microcomputer system (9) are interchangeable and the device possesses an integrated online uninterruptible power supply (14) and operation monitoring.

2. Recoverable device according to claim 1, characterised in that it comprises a GPS receiver (15).

3. Recoverable device according to claims 1 and 2, characterised in that it is integrated into a floating emergency position indicating radio beacon (EPIRB) buoy (1) and the microcomputer (9) via status inputs recognises the respective operating states of the EPIRB buoy (1) via its monitoring logic element and logs them in its flash memory, similarly to interruptions in the power supply, load state of the battery, operating temperature in the buoy and all control commands.

4. Recoverable device according to claims 1 and 2, characterised in that it is integrated into a hermetically sealed submersible capsule with bearing transmitter for recovery of the device.

5. Device according to claims 1 to 4, characterised in that data are evaluated differently and can therefore be stored for different periods of time and in that these values are configured during commissioning.

6. Device according to claims 1 to 5, characterised in that, via the Ethernet interface (13), equipment from various manufacturers can be connected to the microcomputer (9) simultaneously as data sources and data targets and are automatically recorded, managed and logged via a monitoring logic element.

7. Device according to claims 1 to 6, characterised in that a second microcomputer can also be connected via the Ethernet interface (13) and operates as a redundant system, control and monitoring functions only being performed by the first microcomputer until the equipment fails.

## Revendications

1. Dispositif récupérable pour la détection numérique, la mémorisation et éventuellement la délivrance de données spécifiques de fonctionnement de véhicules flottants, comportant un enregistreur électronique de processus équipé d'un microprocesseur (10), et dans lequel le dispositif comporte un enregistreur de processus modulaire, qui dépend du système et est actif en permanence et comporte un micro-ordinateur (9) pouvant être configuré librement et comportant des interfaces universelles et une mémoire flash (11), et dans lequel les interfaces universelles du système de micro-ordinateur (9) constituées par une interface Ethernet (13) pour la détection en temps réel de données d'images et de données vocales et pour la détection de données de fonctionnement sous la forme NMEA, par une interface NMEA (12) pour détecter des données de fonctionnement sous la forme NMEA et par une interface audio (18) pour détecter et numériser 2 canaux vocaux, que le microprocesseur (10) et la mémoire flash (11) du système de micro-ordinateur (9) sont remplaçables et que le dispositif possède un système d'alimentation en courant (14) en ligne intégré exempt de toute interruption et une unité de contrôle de fonctionnement.

2. Dispositif récupérable selon la revendication 1, caractérisé en ce qu'il comporte un récepteur GPS (15).

3. Dispositif récupérable selon les revendications 1 et 2, caractérisé en ce qu'il est intégré dans une radiobalise de canots de sauvetage EPIRB (1) et que le micro-ordinateur (9) identifie, par l'intermédiaire d'entrées d'états les états respectifs de fonctionnement de la balise EPIRB (1), par l'intermédiaire de sa logique de contrôle et les enregistre dans sa mémoire flash, de même que des interruptions du système d'alimentation en courant, de l'état de charge de l'accumulateur, de la température de fonctionnement dans la balise et de toutes les instructions de commande.

4. Dispositif récupérable selon les revendications 1 et 2, caractérisé en ce qu'il est intégré dans une capsule d'immersion absolument étanche, comportant un émetteur de repérage pour la récupération du dispositif.

5. Dispositif selon l'une des revendications 1 à 4, caractérisé en ce que les données sont évaluées différemment et par conséquent peuvent être mémorisées pendant des intervalles de temps ayant des durées différentes et que ces valeurs sont configurées lors de la mise en service.

6. Dispositif selon l'une des revendications 1 à 5, caractérisé en ce que des appareils de différents fabricants peuvent être raccordés simultanément en tant que sources de données et unités de destination des données au micro-ordinateur (9) par l'intermédiaire de l'interface Ethernet (13) et sont enregistrés, gérés et recensés automatiquement par l'intermédiaire d'une logique de contrôle.

7. Dispositif selon l'une des revendications 1 à 6, caractérisé en ce qu'un deuxième micro-ordinateur peut être également raccordé par l'intermédiaire de l'interface Ethernet (13) et travaille en tant que système redondant, des fonctions de commande et de contrôle étant réalisées, jusqu'à défaillance de l'appareil, uniquement par le premier micro-ordinateur.
